# EUROPÄISCHE PATENTSCHRIFT

(11) **EP 4 096 952 B1**
(45) Veröffentlichungstag und Bekanntmachung des Hinweises auf die Patenterteilung: **16.10.2024**
(21) Anmeldenummer: 20820379.4
(22) Anmeldetag: 04.12.2020
(51) Int. Cl.: B60K 15/03, B60K 15/07, B60K 11/02, B60K 11/06, H01M 8/04089, F17C 5/06, H01M 8/04082, H01M 8/04029

(54) **DRUCKGASSPEICHERAUFNAHMEVORRICHTUNG FÜR EIN KRAFTFAHRZEUG**
PRESSURIZED GAS TANK RECEIVING ASSEMBLY FOR A MOTOR VEHICLE
ENSEMBLE DE RÉCEPTION DE RÉSERVOIR DE GAZ SOUS PRESSION POUR UN VÉHICULE À MOTEUR

(30) Priorität: 29.01.2020 DE 102020201046
(43) Veröffentlichungstag der Anmeldung: 07.12.2022
(73) Patentinhaber: Robert Bosch GmbH, 70442 Stuttgart (DE)
(72) Erfinder: KEMMER, Helerson, 71665 Vaihingen (DE)
(86) Internationale Anmeldenummer: PCT/EP2020/084592
(87) Internationale Veröffentlichungsnummer: WO 2021/151561

(56) Entgegenhaltungen:
- DE-A1- 102010 006 019
- JP-A- 2011 194 952
- US-A1- 2019 047 404

## Beschreibung

### Stand der Technik

Brennstoffzellenfahrzeuge, die die elektrische Antriebsenergie aus einem Brennstoffstoff wie Wasserstoff gewinnen, stellen eine Alternative zu den konventionellen Verbrennungsfahrzeugen und den batterieelektrischen Fahrzeugen dar. Eine Vollbetankung eines Brennstoffzellenfahrzeuges ist mit 3 bis 5 Minuten vergleichbar mit einer Vollbetankung eines konventionellen Verbrennungsfahrzeuges. Beispielsweise kann Wasserstoff bei einem Brennstoffzellenfahrzeug in einem zylindrischen Druckgasspeicher, einem sogenannten Gastank, gespeichert werden. Beim Betanken eines Brennstoffzellenfahrzeuges an einer Tankstelle strömt der Brennstoff von einem Gasspeicher der Tankstelle in den Druckgasspeicher des Kraftfahrzeuges. Der Brennstoff in dem Druckgasspeicher wird während des Betankungsvorgangs komprimiert, wobei Kompressionsenergie in Form von Wärme frei wird. Dies hat zur Folge, dass sich einerseits der Brennstoff selbst erwärmt und sich somit der Druck des Brennstoffes im Druckgasspeicher zusätzlich erhöht. Andererseits erwärmt sich auch der Druckgasspeicher. Dabei soll der Brennstoffdruck im Druckgasspeicher einen kritischen Druckgasspeicherdruck und die Temperatur des Druckgasspeichers eine kritische Druckgasspeichertemperatur nicht überschreiten. Der Betankungsvorgang ist beim Tanken von Wasserstoff daher durch ein Betankungsprotokoll nach SAE TIR J2601 weltweit vorgegeben.

Die US 2019/047404 A1 beschreibt einen Hochdruckbehälter, in dem ein unter Hochdruck stehendes Fluid lagerbar ist.

Es ist bekannt, dass der Brennstoff an der Tankstelle auf -40° Celsius vorgekühlt wird, um der Erwärmung des Brennstoffes beim Betankungsvorgangs entgegenzuwirken. Damit kann die Betankungszeit verkürzt werden, jedoch ist das Vorkühlen mit hohen Kosten verbunden. Weiter werden die Druckgasspeicher in Fahrzeugen derart montiert, dass diese größtenteils von Luft umgeben sind, sodass nur eine sehr schlechte Wärmeabfuhr beim Betankungsvorgang über die Außenmantelfläche der Druckgasspeicher erfolgt.

### Offenbarung der Erfindung

Die vorliegende Erfindung zeigt eine Druckgasspeicheraufnahmevorrichtung gemäß den Merkmalen des Anspruchs 1, ein System mit einem Kraftfahrzeug und einer Kühlungsvorrichtung gemäß den Merkmalen des Anspruchs 4, eine Tankstelle gemäß den Merkmalen des Anspruchs 7 sowie ein Verfahren zum Betanken eines Kraftfahrzeuges gemäß den Merkmalen des Anspruchs 10.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Druckgasspeicheraufnahmevorrichtung beschrieben sind, selbstverständlich auch im Zusammenhang mit dem erfindungsgemäßen System, der erfindungsgemäßen Tankstelle und dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt zeigt die vorliegende Erfindung eine Druckgasspeicheraufnahmevorrichtung für ein Kraftfahrzeug zum Kühlen von Druckgasspeichern. Die Druckgasspeicheraufnahmevorrichtung weist einen Körper mit einer Vielzahl an kanalförmigen Aufnahmeflächen zur Aufnahme der Druckgasspeicher auf. Der Körper ist wärmeleitfähig und weist eine Befestigungsschnittstelle zum Anordnen an eine Gegenbefestigungsschnittstelle einer Karosserie des Kraftfahrzeuges auf. Weiter weist der Körper Wärmeleitflächen zur wärmekommunizierenden Verbindung mit der Karosserie auf. Weiter umfasst die Druckgasspeicheraufnahmevorrichtung Druckgasspeicher zum Speichern von unter hohem Druck stehenden Gas, wobei die Druckgasspeicher wärmeleitfähig sind und an den kanalförmigen Aufnahmeflächen des Körpers für eine Wärmekommunikation formschlüssig von dem Körper aufgenommen sind.

Mit der erfindungsgemäßen Druckgasspeicheraufnahmevorrichtung kann eine beim Betankungsvorgang entstehende Wärme besonders vorteilhaft von den wärmeleitfähigen Druckgasspeichern über einen wärmeleitfähigen Körper zu der Karosserie des Kraftfahrzeuges geleitet, insbesondere übertragen, werden. Da die Karosserie eine große thermische Masse und eine große Oberfläche aufweisen kann, kann die beim Betankungsvorgang entstehende Wärme besonders einfach, schnell und effizient, bspw. an die Umgebung, abgegeben werden. Dafür weist der wärmeleitfähige Körper der Druckgasspeicheraufnahmevorrichtung Aufnahmeflächen zur formschlüssigen Aufnahme von Druckgasspeichern auf. Somit kann besonders vorteilhaft sichergestellt werden, dass die beim Betankungsvorgang entstehende Wärme von dem Druckgasspeicher, insbesondere von dem Mantel des Druckgasspeichers, und damit auch von dem unter Druck stehenden Gas im Druckgasspeicher, an den wärmeleitfähigen Körper geleitet bzw. über den wärmeleitfähigen Körper an die Karosserie des Kraftfahrzeuges übertragen wird. Vorteilhafterweise kann somit gewährleistet werden, dass ein für den jeweiligen Druckgasspeicher kritischer Druckgasspeicherdruck nicht überschritten wird und dass eine für den jeweiligen Druckgasspeicher kritische Druckgasspeichertemperatur nicht überschritten wird. Eine Gefahr für die Insassen des Kraftfahrzeuges, bspw. eine Explosion eines Druckgasspeichers, kann somit minimiert werden. Weiter kann durch die erfindungsgemäße Druckgasspeicheraufnahmevorrichtung die Tankdauer für eine Vollbetankung der Druckgasspeicher durch die besonders effiziente Wärmekommunikation zwischen den Druckgasspeichern und der Karosserie des Kraftfahrzeuges besonders kurz sein. Weiter können Zeiten, in welchen der Brennstoffzufluss während des Betankungsvorgangs unterbrochen werden muss, wie im Betankungsprotokoll nach SAE TIR J2601, entfallen. Das bedeutet, dass mit der erfindungsgemäßen Druckgasspeicheraufnahmevorrichtung ein Betanken der Druckgasspeicher des Kraftfahrzeuges zeitkontinuierlich erfolgen kann.

Der wärmeleitfähige Körper kann besonders vorteilhaft die beim Betankungsvorgang entstehende Wärme über die die kanalförmigen Aufnahmeflächen von den Druckgasspeichern aufnehmen, leiten und an die Karosserie eines Kraftfahrzeuges abgeben. Der wärmeleitfähige Körper kann aus einem Metall ausgebildet sein. Der metallische Körper kann eine besonders hohe Wärmeleitfähigkeit aufweisen. Insbesondere kann der metallische Körper zumindest teilweise aus Stahl ausgebildet sein und somit kann gleichzeitig eine besonders hohe Stabilität des Körpers gewährleistet sein. Insbesondere kann der metallische Körper komplett aus Stahl gebildet sein. Der wärmeleitfähige Körper kann auch zumindest teilweise aus einem Kunststoff mit einem hoch wärmeleitfähigen Füllstoff gebildet werden. Ein solcher Körper kann ein besonders geringes Gewicht aufweisen bei gleichzeitig hoher Wärmeleitfähigkeit und kann besonders günstig und einfach hergestellt werden.

Unter, dass die Druckgasspeicher an den kanalförmigen Aufnahmeflächen des Körpers formschlüssig aufgenommen sind, kann verstanden werden, dass die Druckgasspeicher und die kanalförmigen Aufnahmeflächen zumindest teilweise zueinander komplementär ausgebildet sind. Vorzugsweise kontaktieren sich die zueinander komplementär ausgebildeten Flächen, sodass die Wärmekommunikation zwischen den Druckgasspeichern und den Aufnahmeflächen besonders vorteilhaft ist.

Die Druckgasspeicher können im Wesentlichen hohlzylindrisch ausgebildet sein, damit können bekannte Gasflaschen gemeint sein. Die wärmeleitfähigen Druckgasspeicher können aus einem Metall ausgebildet sein. Die metallischen Druckgasspeicher können jeweils eine besonders hohe Wärmeleitfähigkeit aufweisen. Insbesondere können die metallische Druckgasspeicher jeweils zumindest teilweise aus Stahl ausgebildet sein und somit kann eine besonders hohe Stabilität der Druckgasspeicher gewährleistet sein. Insbesondere können die metallischen Druckgasspeicher komplett aus Stahl gebildet sein. Die wärmeleitfähigen Druckgasspeicher können auch jeweils zumindest teilweise einen Kunststoff mit einem hoch wärmeleitfähigen Füllstoff aufweisen. Ein solcher wärmeleitfähiger Druckgasspeicher kann ein besonders geringes Gewicht aufweisen bei gleichzeitig hoher Wärmeleitfähigkeit und kann besonders günstig und einfach hergestellt werden. Die beim Betankungsvorgang entstehende Wärme kann folglich besonders vorteilhaft von den Druckgasspeichern über den wärmeleitfähigen Körper zu der Karosserie des Kraftfahrzeuges geleitet werden.

Weiter weist die Druckgasspeichervorrichtung insbesondere mehrere einzelne Druckgasspeicher auf. Die mehreren einzelnen Druckgasspeicher können fluidtechnisch miteinander verbunden sein. Vorteilhafterweise kann durch mehrere einzelne, insbesondere kleine, Druckgasspeicher im Vergleich zu einem einzelnen, großen Druckgasspeicher insgesamt eine größere Außenmantelfläche bei gleichem Speichervolumen erreicht werden. Weiter können mehrere einzelne Druckgasspeicher zusammen eine größere thermische Masse als ein einzelner, größerer Druckgasspeicher bei gleichem Speichervolumen aufweisen. Als thermische Masse eines Druckgasspeichers kann die Masse des Druckgasspeichermantels, insbesondere des Tankmantels, verstanden werden. In anderen Worten kann als thermische Masse die Masse der das Druckgas, bspw. Wasserstoff, umgebenden Hülle des Druckgasspeichers verstanden werden. Die beim Betankungsvorgang entstehende Wärme kann damit von der besonders großen thermischen Masse der mehreren einzelnen Druckgasspeichern besonders vorteilhaft aufgenommen werden. Ferner kann vorteilhafterweise durch mehrere einzelne, insbesondere kleine, Druckgasspeicher im Vergleich zu einem einzelnen, großen Druckgasspeicher bei gleichem Speichervolumen eine besonders flache Druckgasspeicheraufnahmevorrichtung ausgebildet werden. Eine solche flache Druckgasspeicheraufnahmevorrichtung, insbesondere der Körper der Druckgasspeicheraufnahmevorrichtung, kann besonders vorteilhaft einen Teil der Karossiere, bspw. den Unterboden, des Fahrzeuges bilden. Damit können Kosten gespart werden und die beim Betankungsvorgang entstehende Wärme kann einerseits besonders vorteilhaft durch den Körper selbst und andererseits an den restlichen Teil der Karosserie des Kraftfahrzeuges abgegeben werden.

Als die Vielzahl an kanalförmigen Aufnahmeflächen können insbesondere mehrere nebeneinander und/oder hintereinander angeordnete kanalförmige Aufnahmeflächen verstanden werden. Insbesondere können nebeneinander angeordnete Aufnahmeflächen voneinander beabstandet angeordnet sein. Damit kann gewährleistet werden, dass sich in den nebeneinander angeordneten Aufnahmeflächen aufgenommene Druckgasspeicher optimal in den Aufnahmeflächen aufgenommen werden können, und insbesondere sich nicht berühren. Somit kann sichergestellt werden, dass auch bei einer Wärmeausdehnung der Druckgasspeicher die Druckgasspeicher weiter formschlüssig von dem Körper der Druckgasspeicheraufnahmevorrichtung aufgenommen sind. Mehrere nebeneinander und/oder hintereinander angeordnete kanalförmige Aufnahmeflächen können eine besonders große Fläche zur Aufnahme der Druckgasspeicher bereitstellen. Somit kann eine besonders große Menge an beim Betankungsvorgang entstehender Wärme von den Druckgasspeichern von einer besonders großen Fläche, insbesondere kanalförmigen Aufnahmefläche, aufgenommen, geleitet und an die Karosserie des Kraftfahrzeuges abgeben werden. Weiter kann durch mehrere nebeneinander und/oder hintereinander angeordnete kanalförmige Aufnahmeflächen der wärmeleitfähige Körper besonders flach ausgebildet werden. Die kanalförmigen Aufnahmeflächen des Körpers und die Außenmantelflächen der Druckgasspeichers können jeweils in einem Schnitt zumindest teilweise eine gleiche Form aufweisen. Die kanalförmigen Aufnahmeflächen können in einem Schnitt jeweils einen Kreisbogen darstellen. Die Druckgasspeicher können im Wesentlichen hohlzylindrisch ausgebildet sein und die Außenmantelflächen der Druckgasspeicher können in einem Schnitt jeweils einen Kreis darstellen. Die kreisbogenförmige Aufnahmefläche kann somit besonders vorteilhaft hohlzylindrische Druckgasspeicher aufnehmen und somit besonders vorteilhaft die Wärme beim Betankungsvorgang in den wärmeleitfähigen Körper leiten. Eine Kühlung der Druckgasspeicher kann somit besonders vorteilhaft sein. Es ist auch denkbar, dass die kanalförmige Aufnahmefläche nutenförmig ausgebildet ist. Die Nut kann in einem Schnitt eine Quaderform aufweisen. Eine quaderförmige Aufnahmefläche kann besonders vorteilhaft quaderförmige Druckgasspeicher aufnehmen und somit die Wärmekommunikation zwischen Druckgasspeicher und kanalförmiger Aufnahmefläche begünstigen.

Die Befestigungsschnittstelle kann Löcher zum Durchführen von Schrauben aufweisen. Die Gegenbefestigungsschnittstelle der Karosserie des Kraftfahrzeuges kann korrespondierend angeordnete Löcher aufweisen, insbesondere kann ein Quer- und/oder Längsträger der Karosserie des Kraftfahrzeuges korrespondierend angeordnete Löcher aufweisen. Der Körper der Druckgasspeicheraufnahmevorrichtung kann mittels Schrauben und Muttern an die Karosserie des Kraftfahrzeuges angeordnet werden. Eine solche Anordnung kann besonders einfach erfolgen. Das Anordnen der Befestigungsschnittstelle des Körpers der Druckgasspeicheraufnahmevorrichtung an die Gegenbefestigungsschnittstelle der Karosserie kann auch durch Schweißen erfolgen. Damit kann eine besonders stabile Anordnung erfolgen. Insbesondere kann eine Anordnung durch Schweißen besonders vorteilhaft sein, wenn der Körper der Druckgasspeicheraufnahmevorrichtungen einen Teil der Karossiere des Kraftfahrzeuges bilden soll.

Als Wärmeleitflächen des Körpers können Flächen des Körpers verstanden werden, welche die Wärme von dem Körper zu der Karosserie des Kraftfahrzeuges besonders vorteilhaft leiten können. Wärmeleitflächen können die Karosserie besonders vorteilhaft kontaktieren, sodass der Wärmewiderstand zwischen der Karosserie und den Wärmeleitflächen besonders gering ist. Die Karosserie des Kraftfahrzeuges kann auch Gegenwärmeleitflächen aufweisen, die insbesondere den Wärmeleitflächen des Körpers der Druckgasspeicheraufnahmevorrichtung gegenüberliegen. Insbesondere kann der Wärmewiderstand zwischen der Karosserie und der Wärmeleitfläche geringer sein als an anderen Kontaktstellen der Karosserie mit dem Körper der Druckgasspeichervorrichtung, bspw. an der Befestigungsschnittstelle und der Gegenbefestigungsschnittstelle. In anderen Worten, kann an den Wärmeleitflächen die Wärme besser geleitet, insbesondere übertragen, werden. Mit den Wärmeleitflächen des Körpers, und insbesondere zusammen mit den Gegenwärmeleitflächen der Karosserie des Kraftfahrzeuges, kann die Wärme von den Druckgasspeichern besonders gezielt in besonders günstige Bereiche der Karosserie eingeleitet werden und ein besonders effizientes Abführen der Wärme ist möglich. Das Kühlen der Druckgasspeicher kann damit besonders effizient erfolgen. Es ist auch denkbar, dass die Befestigungsschnittstelle des Körpers der Druckgasspeicheraufnahmevorrichtung die Wärmeleitflächen aufweist, insbesondere ausbildet. Die Gegenbefestigungsschnittstelle der Karosserie kann dann vorteilhafterweise Gegenwärmeleitflächen aufweisen. Somit kann auf besonders einfache Weise die beim Betankungsvorgang entstehende Wärme von den Druckgasspeichern an die Karosserie des Kraftfahrzeuges abgegeben werden. Die Wärmeleitflächen des Körpers der Druckgasspeichervorrichtung können einen wärmeleitfähigen Kleber aufweisen und/oder die Gegenwärmeleitflächen der Karosserie des Kraftfahrzeuges können einen wärmeleitfähigen Kleber aufweisen. Damit kann eine besonders vorteilhafte Wärmekommunikation zwischen dem Körper der Druckgasspeicheraufnahmevorrichtung und der Karosserie des Kraftfahrzeuges erreicht werden. Die beim Betankungsvorgang entstehende Wärme kann damit besonders vorteilhaft geleitet und an die Karosserie des Kraftfahrzeuges abgeben werden. Die Kühlung der Druckgasspeicher kann somit besonders effizient erfolgen.

Der Körper kann kastenförmig ausgebildet sein. Der kastenförmige Körper kann besonders vorteilhaft zwischen zwei Längsträger der Karosserie des Kraftfahrzeuges montiert werden, sodass die beim Betankungsvorgang entstehende Wärme besonders vorteilhaft über den Körper an die Karosserie abgegeben werden kann. Der kastenförmige Körper kann einen Innenraum aufweisen, wobei der kastenförmige Körper in dem Innenraum eine Vielzahl an kanalförmigen Aufnahmeflächen umfasst. Der kastenförmige Körper kann an seiner Außenseite einen um den kastenförmigen Körper umlaufenden, hervorstehenden Rand aufweisen. Der umlaufende, hervorstehende Rand kann die Befestigungsschnittstelle darstellen.

Als unter hohem Druck stehendes Gas kann ein Brennstoff wie Wasserstoff verstanden werden, welcher auf beispielsweise 700 bis 800 bar komprimiert ist bzw. während des Betankungsvorgangs auf 700 bis 800 bar in den Druckgasspeichern komprimiert wird. Die erfindungsgemäße Druckgasspeicheraufnahmevorrichtung kann auch für andere komprimierbare Brennstoffe geeignet sein. Insbesondere kann die erfindungsgemäße Druckgasspeicheraufnahmevorrichtung für die Abfuhr von Kompressionswärme, welche beim Komprimieren eines Gases entsteht, verwendet werden.

Es kann von Vorteil sein, wenn bei einer erfindungsgemäßen Druckgasspeicheraufnahmevorrichtung zumindest 15 % der Außenmantelfläche, vorzugsweise zumindest 25 % der Außenmantelfläche, jedes Druckgasspeichers an den jeweiligen kanalförmigen Aufnahmeflächen des Körpers für eine Wärmekommunikation mit dem Körper aufgenommen sind. Nimmt die Druckgasspeicheraufnahmevorrichtung zumindest 15 % der Außenmantelfläche jedes Druckgasspeichers an den jeweiligen kanalförmigen Aufnahmeflächen des Körpers für eine Wärmekommunikation mit dem Körper auf, so kann eine besonders effektive Kühlung der Druckgasspeicher erfolgen. Nimmt die Druckgasspeicheraufnahmevorrichtung zumindest 25 % der Außenmantelfläche jedes Druckgasspeichers an den jeweiligen kanalförmigen Aufnahmeflächen des Körpers für eine Wärmekommunikation mit dem Körper auf, so kann eine noch effektivere Kühlung der Druckgasspeicher erfolgen. Die zumindest 15 % bzw. die zumindest 25 % der Außenmantelfläche jedes Druckgasspeichers kann eine zusammenhängende Fläche sein. Vorteilhafterweise kann der wärmeleitfähige Körper, insbesondere können die kanalförmigen Aufnahmeflächen des wärmeleitfähigen Körpers der Druckgasspeicheraufnahmevorrichtung, derart ausgebildet sein, dass dieser/diese die zusammenhängende Fläche des jeweiligen Druckgasspeichers aufnimmt/aufnehmen. Somit kann besonders effizient die Wärme von der jeweiligen zusammenhängenden Fläche der Außenmantelfläche der Druckgasspeicher in den wärmeleitfähigen Körper geleitet werden. Ein lokales Abführen der Wärme von den Druckgasspeichern kann damit ermöglicht werden. Auch ist denkbar, dass sich die zumindest 15 % bzw. die zumindest 25 %der Außenmantelfläche jedes Druckgasspeichers jeweils aus mindestens zwei jeweils voneinander getrennten Flächen der jeweiligen Außenmantelfläche zusammensetzen. Hier kann der wärmeleitfähige Körper, insbesondere können die kanalförmigen Aufnahmeflächen des wärmeleitfähigen Körpers, derart ausgebildet sein, dass dieser/diese die sich jeweils aus mindestens zwei jeweils voneinander getrennten Flächen des jeweiligen Druckgasspeichers aufnimmt/aufnehmen. Beispielsweise kann ein solcher wärmeleitfähiger Körper dazu Freiräume aufweisen. Insbesondere können jede der kanalförmigen Aufnahmeflächen des wärmeleitfähigen Körpers Freiräume aufweisen. Vorteilhafterweise kann der Körper die jeweiligen kanalförmigen Aufnahmeflächen gleichmäßig entlang der Längsrichtung eines jeden Druckgasspeichers verteilt aufweisen und/oder gleichmäßig entlang eines Umfangs eines jeden Druckgasspeichers verteilt aufweisen. Somit kann die bei dem Betankungsvorgang entstehende Wärme von den Druckgasspeichern besonders gleichmäßig von dem wärmeleitfähigen Körper aufgenommen werden und an die Karosserie des Kraftfahrzeuges geleitet, insbesondere übertragen, werden.

Vorteilhafterweise kann bei einer erfindungsgemäßen Druckgasspeicheraufnahmevorrichtung der Körper zumindest eines der folgenden Elemente aufweisen:
- ein Wärmeleitelement, insbesondere Kühlrippen und/oder Kühlkanäle und/oder eine Kühlplatte, zum Kühlen des Körpers,
- ein wärmeleitfähiges Elastizitätselement zwischen den Druckgasspeichern und den kanalförmigen Aufnahmeflächen zum Ausgleich einer Wärmeausdehnung der Druckgasspeicher,
- ein Versteifungselement zur Stabilisierung des Körpers.

Das Wärmeleitelement, insbesondere Kühlrippen und/oder Kühlkanäle und/oder eine Kühlplatte, kann/können insbesondere eine zusätzliche Wärmekommunikation zwischen dem wärmeleitfähigen Körper und der Karosserie des Kraftfahrzeuges schaffen. Durch das Wärmeleitelement kann der Wärmewiderstand zwischen der Karosserie und dem wärmeleitfähigen Körper reduziert werden. Folglich kann die Wärme von den Druckgasspeichern verbessert über den Körper an die Karosserie abgegeben werden. Das Wärmeleitelement, insbesondere Kühlrippen und/oder Kühlkanäle und/oder eine Kühlplatte, kann/können aus einem wärmleitfähigen Material bestehen. Das wärmeleitfähige Material kann ein Metall sein. Beispielsweise können zusätzliche Bleche von dem Körper zu der Karosserie des Kraftfahrzeuges führen. Das metallisches Wärmeleitelement, insbesondere Kühlrippen und/oder Kühlkanäle und/oder eine Kühlplatte, kann/können auch zu der Stabilität der Karosserie des Kraftfahrzeuges beitragen. Das wärmeleitfähige Material kann auch ein Kunststoff mit einem hoch wärmeleitfähigen Füllstoff sein. Ein solches Wärmeleitelement, insbesondere Kühlrippen und/oder Kühlkanäle und/oder eine Kühlplatte, kann ein besonders geringes Gewicht aufzeigen. Ferner kann das Wärmeleitelement einstückig mit dem wärmeleitfähigen Körper ausgebildet sein. Dadurch kann der Wärmewiderstand zwischen dem Wärmeleitelement und dem wärmeleitfähigen Körper besonders geringgehalten werden. Das Wärmeleitelement kann auch separat an wärmeleitfähigen Körper angeordnet werden. Die Kühlrippen und/oder die Kühlkanäle und/oder die Kühlplatte können weiter besonders vorteilhaft Wärme von dem wärmeleitfähigen Körper an ein Fluid, bspw. Wasser oder Luft, abgeben. Die beim Betankungsvorgang entstehende Wärme kann somit besonders vorteilhaft von den Druckgasspeichern über den wärmeleitfähigen Körper an die Karosserie des Kraftfahrzeuges geleitet, insbesondere übertragen werden, da durch die Kühlrippen und/oder die Kühlkanäle und/oder die Kühlplatte der Wärmewiderstand des wärmeleitfähigen Körpers geringgehalten werden kann.

Vorteilhafterweise kann das wärmeleitfähige Elastizitätselement zwischen den Druckgasspeichern und den kanalförmigen Aufnahmeflächen eine verbesserte Wärmekommunikation zwischen dem wärmeleitfähigen Körper und den wärmeleitfähigen Druckgasspeichern schaffen. Weiter kann durch das wärmeleitfähige Elastizitätselement die Wärmeausdehnung des jeweiligen Druckgasspeichers ausgeglichen werden. Außerdem kann das wärmeleitfähige Elastizitätselement einstückig mit dem wärmeleitfähigen Körper ausgebildet sein. Dadurch kann der Wärmewiderstand zwischen dem wärmeleitfähigen Elastizitätselement und dem Körper geringgehalten werden. Das wärmeleitfähige Element kann auch separat ausgebildet sein und an den Körper angeordnet sein. Insbesondere können die kanalförmigen Aufnahmeflächen des Körpers jeweils wärmeleitfähige Elastizitätselemente aufweisen bzw. ausbilden. Dadurch kann besonders vorteilhaft die Wärmeausdehnung der Druckgasspeicher ausgeglichen werden und sichergestellt werden, dass die Druckgasspeicher während des Betankungsvorgangs formschlüssig von dem Körper aufgenommen sind. Somit kann gewährleistet werden, dass während des Betankungsvorgangs die Wärme von den Druckgasspeichern über den wärmeleitfähigen Körper an die Karosserie des Kraftfahrzeuges besonders effizient geleitet, insbesondere abgegeben werden kann. Das wärmeleitfähige Elastizitätselement kann als Material einen elastischen, wärmeleitfähigen Kunststoff aufweisen. Ein solches wärmeleitfähiges Elastizitätselement kann besonders einfach hergestellt werden und eine besonders vorteilhafte Wärmeleitfähigkeit aufweisen.

Der Körper kann mehrere Versteifungselement aufweisen. Vorteilhafterweise kann durch Versteifungselemente des Körpers gewährleistet werden, dass die Druckgasspeicher an den kanalförmigen Aufnahmeflächen des Körpers für die Wärmekommunikation besonders vorteilhaft formschlüssig aufgenommen sind. Weiter können die Versteifungselemente die in den jeweiligen Aufnahmeflächen aufgenommen Druckgasspeichern gegen ein Bewegen sichern. Die Versteifungselemente können aus einem wärmeleitfähigen Material ausgebildet sein und den Wärmewiderstand des wärmeleitfähigen Körpers geringgehalten. Damit gemeint ist, dass durch das zusätzliche wärmeleitfähige Material der Versteifungselemente die thermischen Masse des wärmeleitfähigen Körpers erhöht werden kann und somit die Wärme von den Druckgasspeichern besonders vorteilhaft aufgenommen und abgeführt werden kann. Weiter können die Versteifungselemente dazu ausgebildet sein, an die Karosserie des Kraftfahrzeuges angeordnet zu werden und/oder können die Versteifungselemente an den Körper angeordnet sein. Somit können die Versteifungselemente den Transport von Wärme von den Tanks zu dem Körper und der Karosserie weiter verbessern. Insbesondere können Räume zwischen den Versteifungselementen und dem Körper derart ausgestaltet sein, dass ein optimaler Wärmetransport von den Druckgasspeicher zum Körper erfolgt.

Gemäß einem zweiten Aspekt zeigt die vorliegende Erfindung ein System, wobei das System ein Kraftfahrzeug und eine Kühlungsvorrichtung zum Kühlen einer Karosserie des Kraftfahrzeuges umfasst. Das Kraftfahrzeug weist eine erfindungsgemäße Druckgasspeicheraufnahmevorrichtung und ferner die Karosserie mit der Gegenbefestigungsschnittstelle, wobei der wärmeleitfähige Körper der Druckgasspeicheraufnahmevorrichtung mit der Befestigungsschnittstelle an die Gegenbefestigungsschnittstelle angeordnet ist.

Die Karosserie kann mehrere Gegenbefestigungsschnittstellen aufweisen. Auch der wärmeleitfähige Körper der Druckgasspeicheraufnahmevorrichtung kann mehrere, korrespondierende Befestigungsschnittstellen aufweisen. Die Druckgasspeichervorrichtung kann unterhalb des Insassenraums des Kraftfahrzeuges angeordnet sein. Es ist auch denkbar, dass die Druckgasspeichervorrichtung zumindest einen Teil des Unterbodens des Kraftfahrzeuges bildet. Die Karosserie kann Längsträger und Querträger aufweisen. Die Längsträger und/oder Querträger können die Gegenbefestigungsschnittstelle aufweisen, insbesondere darstellen. Insbesondere ist die Druckgasspeichervorrichtung zwischen zwei Längsträgern und/oder zwischen zwei Querträgern der Karosserie des Kraftfahrzeuges angeordnet. Somit kann die wärmekommunizierende Verbindung zwischen dem wärmeleitfähigen Körper, insbesondere den Wärmeleitflächen, und der Karosserie einen besonders geringen Wärmewiderstand aufweisen. Folglich kann die Wärme von den Druckgasspeichern besonders effizient auf die Karosserie übertragen, insbesondere abgeführt werden. Das Abführen der Wärme von der Karosserie kann über die Umgebungsluft erfolgen. Dies kann eine besonders günstige und effiziente Lösung darstellen.

Das Kraftfahrzeug kann ein Brennstoffzellensystem aufweisen. Das Brennstoffzellensystem kann einen Brennstoffzellenstapel mit Brennstoffzellen umfassen. Weiter kann das Brennstoffzellensystem einen Luftverdichter zum Versorgen des Brennstoffzellenstapels mit verdichteter Luft umfassen. Außerdem kann das Brennstoffzellensystem einen Kühlkreislauf zum Kühlen des Brennstoffzellensystems, insbesondere des Brennstoffzellenstapels, aufweisen.

Mit besonderem Vorteil kann bei einem erfindungsgemäßen System die Kühlungsvorrichtung einen Ventilator des Kraftfahrzeuges und ein Kühlluftleitelement zum Leiten der von dem Ventilator geförderten Kühlluft an die Karosserie des Kraftfahrzeuges aufweisen und/oder die Kühlungsvorrichtung weist einen Kühlkreislauf des Kraftfahrzeuges und ein Kühlfluidleitelement zum Leiten des Kühlfluids an die Karosserie des Kraftfahrzeuges auf. Diese Kühlungsvorrichtung kann auch als interne Kühlungsvorrichtung verstanden werden.

Der Ventilator des Kraftfahrzeuges kann insbesondere einer der folgenden Ventilatoren sein:
- Ventilator einer Flüssigkeitskühlung des Motors,
- Gebläseventilator zur Belüftung des Innenraumes eines Kraftfahrzeuges,
- ein Luftverdichter eines Brennstoffzellensystems des Kraftfahrzeuges.

Als Ventilator der Flüssigkeitskühlung des Motors kann der Hauptkühlerventilator des Kraftfahrzeuges verstanden werden. Der Ventilator des Kraftfahrzeuges kann auch ein Luftverdichter des Brennstoffzellensystems des Kraftfahrzeuges sein. Der Luftverdichter kann die Kühlluft mit besonders hohem Druck bzw. mit besonders hoher Strömungsgeschwindigkeit an die Karosserie des Kraftfahrzeuges leiten. Somit kann Wärme besonders effektiv abgeführt werden.

Mit einem Ventilator des Kraftfahrzeuges kann auf besonders einfache und kostengünstige Weise die Karosserie des Kraftfahrzeuges mit der vom Ventilator geförderten Kühlluft gekühlt werden. Durch die Kühlluft kann die beim Betankungsvorgang entstehende Wärme somit besonders vorteilhaft von den Druckgasspeichern abgeführt werden, insbesondere von der Karosserie des Kraftfahrzeuges abgeführt. Das Kühlluftleitelement kann die Kühlluft von dem Ventilator an die Karosserie leiten und damit die Wärme von der Karossiere abführen. Das Kühlluftleitelement kann ein Rohr zwischen dem Ventilator und der Karosserie aufweisen, durch das die Kühlluft von dem Ventilator zu der Karosserie strömt. Das Kühlluftleitelement kann auch mehrere Rohre als fluidkommunizierende Verbindung zwischen Ventilator und Karosserie aufweisen. Die Rohre können die Kühlluft an unterschiedliche Stellen der Karosserie führen. Insbesondere wird die Kühlluft mittels dem Kühlluftleitelement an die Stellen der Karosserie des Kraftfahrzeuges geleitet, an welchem die Karosserie eine besonders hohe Temperatur im Vergleich zu anderen Stellen der Karosserie aufweist. Somit kann besonders effizient Wärme abgeführt werden und die Druckgasspeicher, insbesondere über die Karosserie des Kraftfahrzeuges, gekühlt werden. Es ist auch denkbar, dass die Kühlluft mittels dem Kühlluftleitelement an die Stellen der Karosserie geleitet wird, an welchen der wärmeleitfähige Körper mit seinen Wärmeleitflächen an die Karosserie des Kraftfahrzeuges angeordnet ist. Das Kühlluftleitelement kann die Kühlluft auch an ein Wärmeleitelement des wärmeleitfähigen Körpers der Druckgasspeicheraufnahmevorrichtung leiten. Somit kann besonders vorteilhaft Wärme abgeführt werden. Vorteilhafterweise kann die Kühlluft von dem Ventilator des Kraftfahrzeuges mittels dem Kühlluftleitelement auch an den wärmeleitfähigen Körper und/oder die Druckgasspeicher geführt werden und somit zusätzlich Wärme abgeführt werden.

Der Kühlkreislauf des Kraftfahrzeuges kann einer der folgenden Kühlkreisläufe sein:
- Kühlkreislauf zum Kühlen eines Motors oder einer Leistungselektronik des Kraftfahrzeuges,
- Kältekreislauf, insbesondere Kältekreislauf einer Klimaanlage des Kraftfahrzeuges, zur Klimatisierung des Kraftfahrzeuges,
- Kühlkreislauf zum Kühlen eines Brennstoffzellensystems.

Mit einem Kühlkreislauf des Kraftfahrzeuges können auf besonders einfache und kostengünstige Weise die Karosserie des Kraftfahrzeuges mittels dem Kühlfluid gekühlt werden. Die beim Betankungsvorgang entstehende Wärme kann somit besonders vorteilhaft von den Druckgasspeichern abgeführt werden, insbesondere kann die entstehende Wärme von den Druckgasspeichern über den wärmeleitfähigen Körper an die Karosserie des Kraftfahrzeuges abgeführt werden. Durch das Kühlfluid kann Wärme abgeführt werden. Das Kühlfluidleitelement kann das Kühlfluid an die Karosserie leiten und damit die Wärme von der Karossiere abführen. Vorzugsweise kann an das Kühlfluidleitelement mittels dem Kühlluftleitelement Kühlluft von dem Ventilator, insbesondere dem Hauptkühlerventilator, geleitet werden. Damit kann das Kühlfluid in dem Kühlfluidleitelement zusätzlich gekühlt werden und Wärme von der Karosserie des Kraftfahrzeuges besonders effizient abgeführt werden. Das Kühlfluidleitelement kann ein Rohr sein, das das Kühlfluid von dem Kühlkreislauf des Kraftfahrzeuges an die Karosserie leitet. Das Kühlfluidleitelement kann auch mehrere Rohre aufweisen, wobei die Rohre das Kühlfluid an unterschiedliche Stellen der Karosserie führen. Das Kühlfluidleitelement kann auch Kühlschläuche aufweisen, wobei die Kühlschläuche an der Karosserie des Kraftfahrzeuges und/oder um die Druckgasspeicher herum angeordnet sind. Das Kühlfluidleitelement kann das Kühlfluid auch an ein Wärmeleitelement des wärmeleitfähigen Körpers der Druckgasspeicheraufnahmevorrichtung leiten. Somit kann besonders vorteilhaft Wärme abgeführt werden. Insbesondere wird das Kühlfluid mittels dem Kühlfluidleitelement an die Stellen der Karosserie des Kraftfahrzeuges geleitet, an welchem die Karosserie eine besonders hohe Temperatur im Vergleich zu den restlichen Stellen der Karosserie aufweist. Somit kann besonders effizient Wärme abgeführt werden und die Druckgasspeicher, insbesondere über die Karosserie des Kraftfahrzeuges, gekühlt werden. Es ist auch denkbar, dass das Kühlfluid mittels dem Kühlfluidleitelement an die Stellen der Karosserie geleitet wird, an welchen der wärmeleitfähige Körper mit seinen Wärmeleitflächen an die Karosserie des Kraftfahrzeuges angeordnet ist. Vorteilhafterweise kann das Kühlfluid mittels dem Kühlluftleitelement auch an den wärmeleitfähigen Körper und/oder die Druckgasspeicher geführt werden und somit zusätzlich Wärme abgeführt werden. Mit dem Kältekreislauf, insbesondere Kältekreislauf einer Klimaanlage des Kraftfahrzeuges, kann besonders kühles Kühlfluid an die Karosserie des Kraftfahrzeuges geleitet werden.

Nach einer weiteren bevorzugten Ausführungsform des erfindungsgemäßen Systems kann die Kühlungsvorrichtung ein externes Kühlungselement zum Kühlen der Karosserie des Kraftfahrzeuges aufweisen, wobei das Kühlungselement im Bereich des Kraftfahrzeuges anordbar ist und das Kühlungselement insbesondere eines der folgenden Elemente ist:
- ein externer Ventilator,
- eine externe Wasseranspritzvorrichtung zum Anspritzen des Kraftfahrzeuges mit Wasser,
- eine externe Kühlkammer.

Das externe Kühlungselement kann vor, hinter, unter und/oder über das Kraftfahrzeug angeordnet sein. Vorzugsweise ist das externe Kühlungselement unter dem Kraftfahrzeug angeordnet, sodass besonders effizient Wärme durch das Kühlungselement von der Karosserie des Kraftfahrzeuges abgeführt werden kann. Das externe Kühlungselement kann als ein Kühlungselement verstanden, welches zwar mit dem Kraftfahrzeug mitgeführt werden kann, aber in einem Normalzustand des Kraftfahrzeuges nicht fest mit dem Kraftfahrzeug verbunden ist, wie z. B. der fest angeordnete Hauptkühlventilator des Kraftfahrzeuges. Beispielsweise kann in dem Kofferraum des Kraftfahrzeuges ein mobiler Ventilator mitgeführt werden, welcher bei dem Betankungsvorgang aus dem Kofferraum herausholbar ist. Die externe Wasseranspritzvorrichtung kann besonders effizient die Karosserie des Kraftfahrzeuges beim Betankungsvorgang kühlen, da Wasser im Vergleich zu Luft, unter gleichen Bedingungen, besser Wärme speichern kann. Zusätzlich kann Wasser beim Verdampfen der Karosserie zusätzlich Wärme entziehen und somit die Karosserie kühlen. Das Kraftfahrzeug kann eine Brennstoffzelle aufweisen, wobei dann vorteilhafterweise die externe Wasseranspritzvorrichtung Wasser, das durch den Betrieb der Brennstoffzelle des Kraftfahrzeuges erzeugt worden ist, zum Anspritzen verwendet. Es ist auch denkbar, dass die Wasseranspritzvorrichtung den wärmeleitfähigen Körper und/oder die Druckgasspeichertanks der Druckgasspeicheraufnahmevorrichtung mit Wasser anspritzt, sodass Wärme zusätzlich abgeführt wird und besonders vorteilhaft sichergestellt werden kann, dass die beim Betankungsvorgang entstehende Wärme von den Druckgasspeichern und damit auch von dem unter Druck stehenden Gas im Druckgasspeicher, an den wärmeleitfähigen Körper geleitet bzw. über den wärmeleitfähigen Körper an die Karosserie des Kraftfahrzeuges übertragen wird. Ferner kann auch eine Tankstelle das externe Kühlungselement aufweisen.

Das System gemäß dem zweiten Aspekt der Erfindung weist damit dieselben Vorteile auf, wie sie bereits zu der Druckgasspeicheraufnahmevorrichtung gemäß dem ersten Aspekt der Erfindung beschrieben worden sind.

Gemäß einem dritten Aspekt zeigt die vorliegende Erfindung eine Tankstelle zur Verwendung mit dem oben genannten erfindungsgemäßen System. Die Tankstelle weist einen Stellbereich zum Abstellen des Kraftfahrzeuges auf. Weiter weist die Tankstelle eine Tankstellenkontrolleinheit mit einer Datenschnittstelle zum Kommunizieren von Daten mit einer Gegendatenschnittstelle des Kraftfahrzeuges auf. Ferner ist die Tankstellenkontrolleinheit zumindest dazu ausgebildet, aufgrund der Datenkommunikation zwischen der Datenschnittstelle und der Gegendatenschnittstelle einen positiven Betankungsvorgangsstatus des Kraftfahrzeuges zu erkennen und beim Erkennen des positiven Betankungsvorgangstatus die Kühlungsvorrichtung zum Kühlen der Karosserie des Kraftfahrzeuges zu aktivieren.

Die Tankstelle kann eine Druckgasspeicherzapfsäule an dem Stellbereich der Tankstelle zum Bereitstellen eines unter hohem Druck stehenden Gases aufweisen. Die Druckgasspeicherzapfsäule kann einen Tankschlauch aufweisen, wobei der Tankschlauch die Datenschnittstelle zum Kommunizieren von Daten mit der Gegendatenschnittstelle des Kraftfahrzeuges aufweist. Das Kraftfahrzeug kann an einem Tankstutzen die Gegendatenschnittstelle aufweisen. Die Datenschnittstelle und die Gegendatenschnittstelle können eine Infrarotschnittstelle sein. Ein positiver Betankungsvorgangsstatus des Kraftfahrzeuges kann vorliegen, wenn das Kraftfahrzeug auf dem Stellbereich abgestellt ist, das Kraftfahrzeug stillsteht, eine Brennstoffzelle bzw. ein Brennstoffzellensystem des Kraftfahrzeuges nicht in Betrieb ist und die Druckgasspeicherzapfsäule fluidkommunizierend mit den Druckgasspeichern der Druckgasspeicheraufnahmevorrichtung verbunden ist. Die Tankstellenkontrolleinheit kann mittels der Datenschnittstelle Daten an die Gegendatenschnittstelle des Kraftfahrzeuges senden, um die Kühlungsvorrichtung, insbesondere einen der Ventilatoren des Kraftfahrzeuges und/oder einen der Kühlkreislauf des Kraftfahrzeuges zum Kühlen der Karosserie des Kraftfahrzeuges, zu aktivieren. Die Tankstellenkontrolleinheit kann auch zusätzlich, bspw. über elektrische Leitungen, das externe Kühlungselement der Kühlungsvorrichtung aktivieren, insbesondere wenn die Tankstelle das externe Kühlungselement aufweist. Das Aktivieren eines Ventilators kann als ein Einschalten des Ventilators verstanden werden. Beim Aktivieren des Kühlkreislaufes kann eine Kühlkreislaufpumpe des Kühlkreislaufes eingeschalten werden. Die Kühlungsvorrichtung kann in Abhängigkeit der Temperatur der Druckgasspeichertanks und/oder in Abhängigkeit der Temperatur des wärmeleitfähigen Körpers der Druckgasspeicheraufnahmevorrichtung und/oder in Abhängigkeit der Temperatur der Karosserie des Kraftfahrzeuges gesteuert werden.

Es kann von Vorteil sein, wenn bei einer erfindungsgemäßen Tankstelle die Tankstelle das externe Kühlungselement der Kühlungsvorrichtung zum Kühlen der Karosserie des Kraftfahrzeuges aufweist, wobei das Kühlungselement im Bereich des Kraftfahrzeuges angeordnet ist und das Kühlungselement eines der folgenden Elemente ist:
- der externe Ventilator,
- die externe Wasseranspritzvorrichtung zum Anspritzen des Kraftfahrzeuges mit Wasser,
- die externe Kühlkammer

Das externe Kühlungselement der Tankstelle kann vor, hinter, unter und/oder über das Kraftfahrzeug angeordnet sein. Vorzugsweise ist das externe Kühlungselement unter dem Kraftfahrzeug angeordnet, sodass besonders effizient Wärme durch das Kühlungselement von der Karosserie des Kraftfahrzeuges abgeführt werden kann. Das externe Kühlungselement kann im Vergleich zu einem Kühlungselement des Kraftfahrzeuges besonders leistungsstark ausgeführt werden und somit die Karosserie des Kraftfahrzeuges besonders vorteilhaft kühlen. Die Tankstelle kann an dem Stellplatz das externe Kühlelement aufweisen. Die von dem externen Ventilator geförderte Kühlluft kann vorgekühlt werden. Damit gemeint ist, dass die Kühlluft beispielsweise durch einen Kältekreis auf eine Temperatur, welche geringer als die Temperatur der Umgebungsluft ist, vorgekühlt wird. Somit kann die beim Betankungsvorgang entstehende Wärme besonders vorteilhaft von der Karosserie des Kraftfahrzeuges und somit von den Druckgasspeichern abgeführt werden. Die externe Wasseranspritzvorrichtung der Tankstelle kann besonders effizient die Karosserie des Kraftfahrzeuges beim Betankungsvorgang kühlen. Vorteilhafterweise kann das Wasser, mit welcher das Kraftfahrzeug, insbesondere die Karosserie des Kraftfahrzeuges, angespritzt wird, vorgekühlt werden. Damit gemeint ist, dass das Wasser beispielsweise durch einen Kältekreis auf eine Temperatur, welche geringer als die Temperatur der Umgebungsluft ist, vorgekühlt wird. Somit kann die beim Betankungsvorgang entstehende Wärme besonders vorteilhaft von der Karosserie des Kraftfahrzeuges und somit von den Druckgasspeichern abgeführt werden.

Es ist auch denkbar, dass, z. B. im Winter, ein anderes Fluid als Wasser zum Anspritzen des Kraftfahrzeuges, insbesondere der Karosserie, verwendet wird.

Vorteilhafterweise kann bei einer erfindungsgemäßen Tankstelle der Stellbereich eine Fahrzeuggrube mit einem fluiddurchlässigen Deckel aufweisen, wobei in der Fahrzeuggrube die Kühlungsvorrichtung zum Kühlen der Karosserie des Kraftfahrzeuges angeordnet ist. Die Fahrzeuggrube kann auf dem Stellplatz derart ausgebildet sein, dass ein Kraftfahrzeug sich nach dem Abstellen auf dem Stellplatz über der Fahrzeuggrube befindet. Der Abstellplatz kann dafür Markierungen aufweisen. Somit kann durch die Kühlungsvorrichtung die Karosserie des Kraftfahrzeuges besonders vorteilhaft, einfach und effizient gekühlt werden. Der fluiddurchlässige Deckel kann ein Gitter, insbesondere ein Metallgitter, sein. Das Gitter kann einer besonders hohen Belastung, wie einem Kraftfahrzeug, standhalten. Durch das Gitter kann die Kühlungsvorrichtung, bspw. der externe Ventilator der Tankstelle und/oder die externe Wasseranspritzvorrichtung, besonders einfach, ohne großen Strömungswiderstand, das Kraftfahrzeug, insbesondere die Karosserie des Kraftfahrzeuges, kühlen.

Die Tankstelle gemäß dem dritten Aspekt der Erfindung weist damit dieselben Vorteile auf, wie sie bereits zu der Druckgasspeicheraufnahmevorrichtung gemäß dem ersten Aspekt der Erfindung bzw. dem System gemäß dem zweiten Aspekt der Erfindung beschrieben worden sind.

Gemäß einem vierten Aspekt zeigt die vorliegende Erfindung ein Verfahren, das mit dem erfindungsgemäßen System an der erfindungsgemäßen Tankstelle anzuwenden ist, wobei das Kraftfahrzeug die Gegendatenschnittstelle aufweist, und wobei das Verfahren die folgenden Schritte aufweist:
a) Datenkommunikation zwischen der Datenschnittstelle der Tankstelle und der Gegendatenschnittstelle des Kraftfahrzeuges zum Ermitteln des Status des Betankungsvorgangs,
b) Erkennen des positiven Betankungsvorgangsstatus durch die Tankstellenkontrolleinheit,
c) Aktivieren der Kühlungsvorrichtung durch die Tankstellenkontrolleinheit und/oder durch eine Fahrzeugkontrolleinheit zum Kühlen der Karosserie des Kraftfahrzeuges und Betanken der Druckgasspeicher des Kraftfahrzeuges,

In dem Schritt a) kann das Kraftfahrzeug der Tankstellenkontrolleinheit Informationen zu einer Temperatur der Karosserie des Kraftfahrzeuges und/oder der Druckgasspeicher und/oder des wärmeleitfähigen Körpers senden. Weiter kann das Kraftfahrzeug Informationen über den Füllstand der Druckgasspeicher an die Tankstellenkontrolleinheit senden. Diese Informationen können auch während des kompletten Betankungsvorgangs gesendet werden. Das Kraftfahrzeug kann diese Informationen auch an ein Steuergerät, was eine Fahrzeugkontrolleinheit sein kann, des Kraftfahrzeuges senden, welches für die Steuerung der Kühlungsvorrichtung des Kraftfahrzeuges ausgebildet ist. Durch die oben aufgeführten Informationen kann die Kühlungsvorrichtung der Tankstelle und/oder die Kühlungsvorrichtung des Kraftfahrzeuges derart angesteuert bzw. aktiviert werden, dass eine besonders effiziente Kühlung des Kraftfahrzeuges, insbesondere der Karosserie des Kraftfahrzeuges, durch die Kühlungsvorrichtung erfolgen kann. Ferner kann das Kraftfahrzeug der Tankstellenkontrolleinheit die Information senden, dass das Kraftfahrzeug, insbesondere die Druckgasspeicher, und die Tankstelle, insbesondere die Druckgasspeicherzapfsäule, fluidtechnisch sicher miteinander verbunden sind und das Fahrzeug in Ruhe ist und somit der Betankungsvorgang gestartet werden kann. Die Information, dass der Betankungsvorgang gestartet werden kann, kann als positiver Betankungsvorgangstatus verstanden werden. In dem Schritt b) des Verfahrens erkennt die Tankstellenkontrolleinheit den positiven Betankungsvorgangsstatus. Das Erkennen kann durch ein Auswerten der Daten durch die Tankstellenkontrolleinheit erfolgen. In einem nächsten Schritt c) wird die Kühlungsvorrichtung durch die Tankstellenkontrolleinheit aktiviert und insbesondere die Druckgasspeicher des Kraftfahrzeuges mit Gas betankt. Die Tankstellenkontrolleinheit kann die Kühlungsvorrichtung der Tankstelle und/oder die Kühlungsvorrichtung des Kraftfahrzeuges aktivieren. Insbesondere kann die Tankstellenkontrolleinheit ein Steuergerät des Kraftfahrzeuges, welches für die Steuerung der Kühlungsvorrichtung des Kraftfahrzeuges ausgebildet ist, ansteuern, wobei dieses wiederum die Kühlungsvorrichtung des Kraftfahrzeuges aktiviert. Das Betanken der Druckgasspeicher mit dem Gas von der Druckgasspeicherzapfsäule und das Aktvieren der Kühlungsvorrichtung kann gleichzeitig erfolgen. Weiter kann die Tankstellenkontrolleinheit den Durchfluss des Gases, welches von der Druckgasspeicherzapfsäule in die Druckgasspeicher des Kraftfahrzeuges strömt, steuern, sodass die während des Betankungsvorgang entstehende Wärme von dem Fahrzeug, insbesondere der Karosserie des Fahrzeugs besonders vorteilhaft abgeführt werden kann. Damit kann gemeint sein, dass die Tankstellenkontrolleinheit den Durchfluss des Gases derart steuert, dass zu Beginn in einem ersten Zeitintervall der Durchfluss bis zu einem maximalen Durchflusswert ansteigt, insbesondere kontinuierlich ansteigt. In einem darauffolgenden zweiten Zeitintervall kann dieser maximale Durchflusswert für eine Zeit gehalten werden und in einem darauffolgenden dritten Zeitintervall kann der Durchfluss des Gases abnehmen, insbesondere kontinuierlich abnehmen, insbesondere gegen Null gehen. In einem zusätzlichen Schritt des Verfahrens kann das Betanken der Druckgasspeicher beendet werden. Damit kann gemeint sein, dass keine Strömung des Gases von der Druckgasspeicherzapfanlage zu den Druckgasspeichern des Kraftfahrzeuges mehr erfolgt. Insbesondere kann die Tankstellenkontrolleinheit die Kühlungsvorrichtung, insbesondere die externen Kühlungselemente der Tankstellen deaktivieren. Deaktivieren kann als Abschalten verstanden werden.

Vorteilhafterweise wird bei einem erfindungsgemäßen Verfahren nach dem Schritt c) oder nach dem zusätzlichen Schritt des Beendens des Betankens in dem Schritt d) die Kühlungsvorrichtung, vorzugsweise die Kühlungsvorrichtung des Kraftfahrzeuges, erst deaktiviert, wenn die Druckgasspeicher einen festlegbaren Temperaturschwellenwert unterschritten haben. Das bedeutet, dass, insbesondere nach dem Beenden des Betankens der Druckgasspeicher, die Kühlungsvorrichtung des Kraftfahrzeuges weiter aktiviert bleiben kann. Somit kann die Wärme von dem Kraftfahrzeug, insbesondere von der Karosserie und/oder den Druckgasspeichern und/oder dem wärmleitfähigen Körper, auch nach dem Betankungsvorgang weiter abgeführt werden. Dies kann den Vorteil haben, dass die Druckgasspeicher auf eine Temperatur unterhalb eines festlegbaren Temperaturschwellenwerts gebracht werden können und somit eine Gefahr für die Insassen des Kraftfahrzeuges, bspw. eine Explosion eines Druckgasspeicher, minimiert werden kann. Der festlegbare Temperaturschwellenwert liegt vorteilhafterweise unterhalb der kritischen Druckgasspeichertemperatur. Die Druckgasspeicher können auch auf einen Druck unterhalb eines festlegbaren Druckschwellenwertes gebracht werden. Der festlegbare Druckschwellenwert liegt vorteilhafterweise unterhalb des kritischen Druckgasspeicherdruckes. Ist der festlegbare Temperaturschwellenwert und/oder der festlegbare Druckschwellenwert unterschritten, so kann die Kühlungsvorrichtung des Kraftfahrzeuges, insbesondere durch das Steuergerät des Kraftfahrzeuges, deaktiviert werden.

Die Verfahren gemäß dem vierten Aspekt der Erfindung weist damit dieselben Vorteile auf, wie sie bereits zu der Druckgasspeicheraufnahmevorrichtung gemäß dem ersten Aspekt der Erfindung bzw. dem System gemäß dem zweiten Aspekt der Erfindung bzw. der Tankstelle gemäß dem dritten Aspekt der Erfindung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedenen Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen schematisch:
- Fig. 1: eine Ausführungsform einer Druckgasspeicheraufnahmevorrichtung,
- Fig. 2: die Ausführungsform der Druckgasspeicheraufnahmevorrichtung der Fig. 1 in einem Vertikalschnitt,
- Fig. 3: weitere Ausführungsform einer erfindungsgemäßen Druckgasspeicheraufnahmevorrichtung,
- Fig. 4: eine weitere Ausführungsform einer erfindungsgemäßen Druckgasspeicheraufnahmevorrichtung in einem Schnitt,
- Fig. 5: eine weitere Ausführungsform einer erfindungsgemäßen Druckgasspeicheraufnahmevorrichtung in einem Schnitt,
- Fig. 6: eine Ausführungsform eines erfindungsgemäßen Systems,
- Fig. 7: eine Ausführungsform eines erfindungsgemäßen Systems,
- Fig. 8: eine Ausführungsform einer erfindungsgemäßen Tankstelle,
- Fig. 9: eine Ausführungsform einer erfindungsgemäßen Tankstelle, und
- Fig. 10: eine Ausführungsform eines erfindungsgemäßen Verfahrens.

In den nachfolgenden Figuren werden für die gleichen technischen Merkmale auch von unterschiedlichen Ausführungsbeispielen identische Bezugszeichen verwendet.

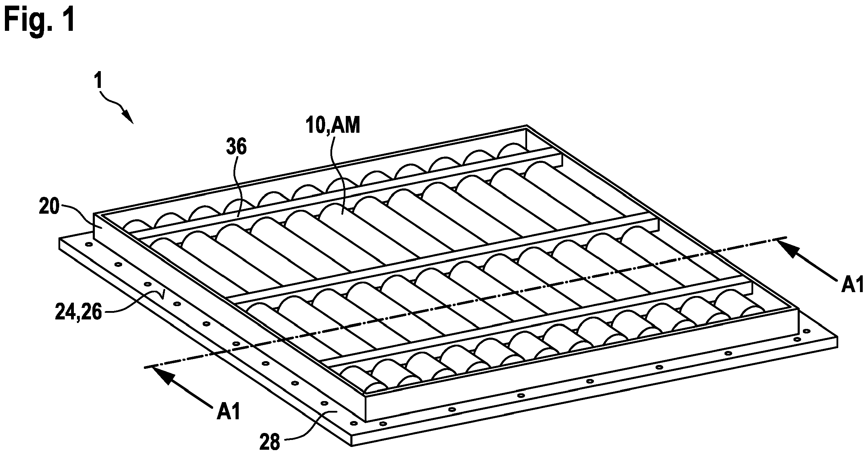

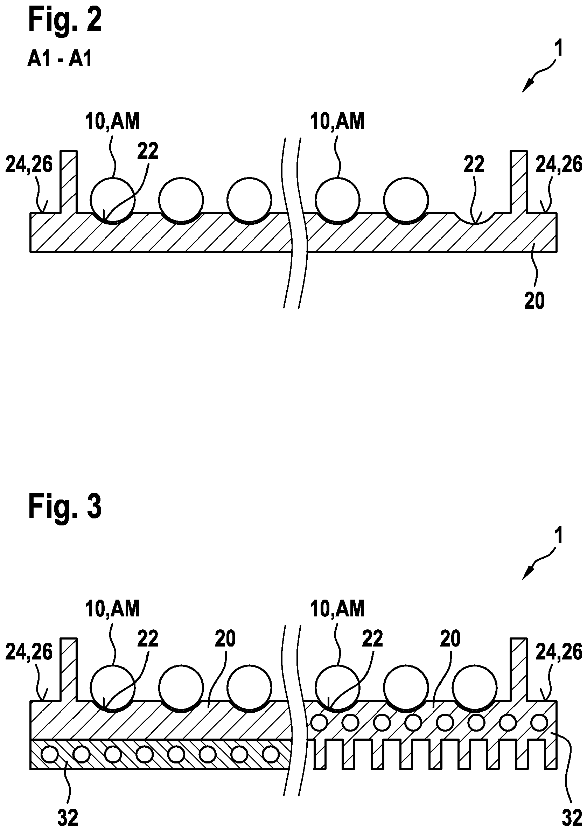

Fig.1 zeigt in einer perspektivischen Ansicht eine Ausführungsform einer Druckgasspeicheraufnahmevorrichtung 1. Die Druckgasspeicheraufnahmevorrichtung 1 weist einen wärmeleitfähigen Körper 20, bspw. aus Stahl, auf. Der Körper 20 kann kastenförmig ausgebildet sein, wobei in einem Innenraum des kastenförmigen Körpers 20 in einer Vielzahl an kanalförmigen Aufnahmeflächen 22 (hier nicht ersichtlich) Druckgasspeicher 10 aufgenommen sind. Der Körper 20 weist einen um den kastenförmigen Körper 20 umlaufenden, hervorstehenden Rand 28 auf. Der umlaufende, hervorstehende Rand 38 stellt eine Befestigungsschnittstelle 26 und gleichzeitig eine Wärmeleitfläche 24 dar. Die Befestigungsschnittstelle 26 kann Löcher zum Durchführen von Schrauben aufweisen. Der Körper 20 kann mit der Befestigungsschnittstelle an eine Gegenbefestigungsschnittstelle 126 einer Karosserie 120 eines Kraftfahrzeuges 100 angeordnet werden. Die Druckgasspeicher 10 sind wärmeleitfähig und können wie in Fig. 1 hohlzylindrisch ausgebildet sein. Die Druckgasspeicher 10 können z. B. aus Stahl ausgebildet sein und unter hohem Druck stehendes Gas, wie bspw. Wasserstoff, besonders vorteilhaft speichern. Weiter sind in Fig. 1 zusätzlich drei Versteifungselemente 36 illustriert, die die in den jeweiligen Aufnahmeflächen 22 aufgenommen Druckgasspeicher 10 gegen ein Bewegen sichern und zur Stabilität des Körpers 20 beitragen. Die beim Betankungsvorgang entstehende Wärme kann somit besonders vorteilhaft von den Druckgasspeichern 10 abgeführt werden, insbesondere kann die entstehende Wärme von den Druckgasspeichern 10 über den wärmeleitfähigen Körper 20 an die Karosserie 120 des Kraftfahrzeuges 100 geleitetet werden. Fig. 2 zeigt die Ausführungsform der Druckgasspeicheraufnahmevorrichtung 1 der Fig. 1 in einem Vertikalschnitt A1-A1 (siehe Schnittachse A1-A1 in Fig. 1). In Fig. 2 sind die wärmeleitfähigen Druckgasspeicher 10 mit einer jeweiligen Außenmantelfläche AM an den kanalförmigen Aufnahmeflächen 22 des Körpers 20 für eine Wärmekommunikation formschlüssig von dem Körper 20 aufgenommen. Die kanalförmigen Aufnahmeflächen 22 sind kreisbogenförmig ausgebildet.

Fig. 3 offenbart zwei weitere Ausführungsform einer erfindungsgemäßen Druckgasspeicheraufnahmevorrichtung 1 jeweils in einem Vertikalschnitt (vgl. Schnittachse A1-A1 in Fig. 1). In beiden Ausführungsformen sind Druckgasspeicher 10 in kanalförmigen Aufnahmeflächen 22 aufgenommen. Weiter weisen beide Ausführungsformen eine Wärmeleitfläche 24 und eine Befestigungsschnittstelle 26 auf. Die eine weitere Ausführungsform, die links dargestellt ist, zeigt ein separates Wärmeleitelement 32, wobei das Wärmeleitelement 32 eine Kühlplatte ist, welche an den Körper 20 angeordnet ist. Das Wärmeleitelement 32 weist in der Kühlplatte zusätzlich Kühlkanäle auf, durch welche beispielsweise ein Kühlfluid oder Kühlluft strömen kann. Die eine weitere Ausführungsform, die rechts dargestellt ist, zeigt ein Wärmeleitelement 32, wobei das Wärmeleitelement 32 aus einem Stück mit dem wärmeleitfähigen Körper 20 ist. Das Wärmeleitelement 32 weist hier ebenfalls Kühlkanäle auf. Weiter umfasst das Wärmeleitelement 32 Kühlrippen, durch welche Kühlluft strömen kann und somit zusätzlich Wärme von dem wärmeleitfähigen Körper 20 abgeführt werden kann.

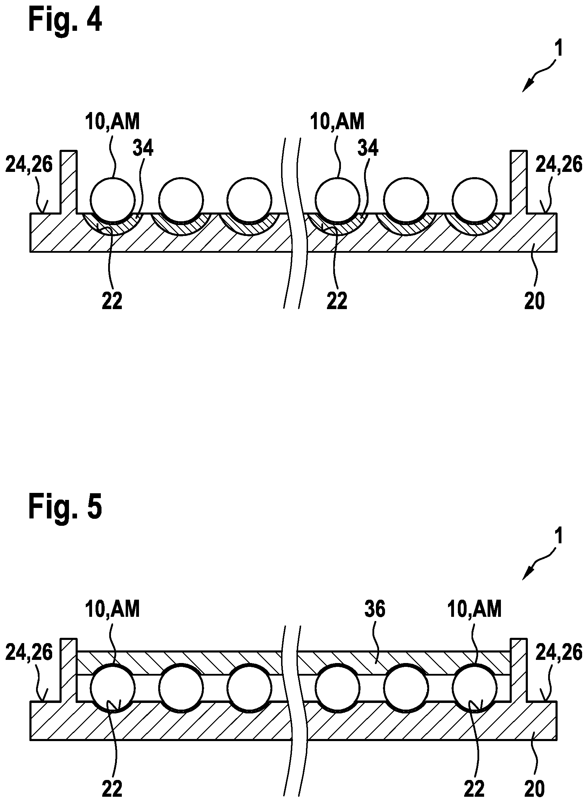

Fig. 4 illustriert eine weitere Ausführungsform einer erfindungsgemäßen Druckgasspeicheraufnahmevorrichtung 1 in einem Vertikalschnitt (vgl. Schnittachse A1-A1 in Fig. 1). In Fig. 4 sind Druckgasspeicher 10 in nebeneinander angeordneten, kanalförmigen Aufnahmeflächen 22 aufgenommen. Weiter sind die nebeneinander angeordneten, kanalförmigen Aufnahmeflächen 22 voneinander beabstandet angeordnet. Die in den Aufnahmeflächen 22 aufgenommenen Druckgasspeicher 10 berühren sich somit nicht. Somit kann ferner sichergestellt werden, dass auch bei einer Wärmeausdehnung der Druckgasspeicher 10 die Druckgasspeicher 10 weiter formschlüssig von dem wärmeleitfähigen Körper 20 der Druckgasspeicheraufnahmevorrichtung 1 aufgenommen sind. Außerdem offenbart Fig. 4 zwischen den Druckgasspeichern 10 und den kanalförmigen Aufnahmeflächen 22 jeweils ein wärmeleitfähige Elastizitätselement 34, wodurch die Wärmeausdehnung des jeweiligen Druckgasspeichers 10 ausgeglichen werden kann. Die Wärmeausdehnung der Druckgasspeicher 10 kann aufgrund der beim Betankungsvorgang entstehenden Wärme eintreten.

Fig. 5 zeigt in einer weiteren Ausführungsform eine erfindungsgemäße Druckgasspeicheraufnahmevorrichtung 1 in einem Vertikalschnitt (vgl. Schnittachse A1-A1 in Fig. 1), wobei in Fig. 5 zusätzlich zu Fig. 2 ein Versteifungselement 36 dargestellt ist. Dieses Versteifungselement 36 sichert die in den jeweiligen Aufnahmeflächen 22 aufgenommen Druckgasspeicher 10 gegen ein Bewegen und trägt zur Stabilität des Körpers 20 bei.

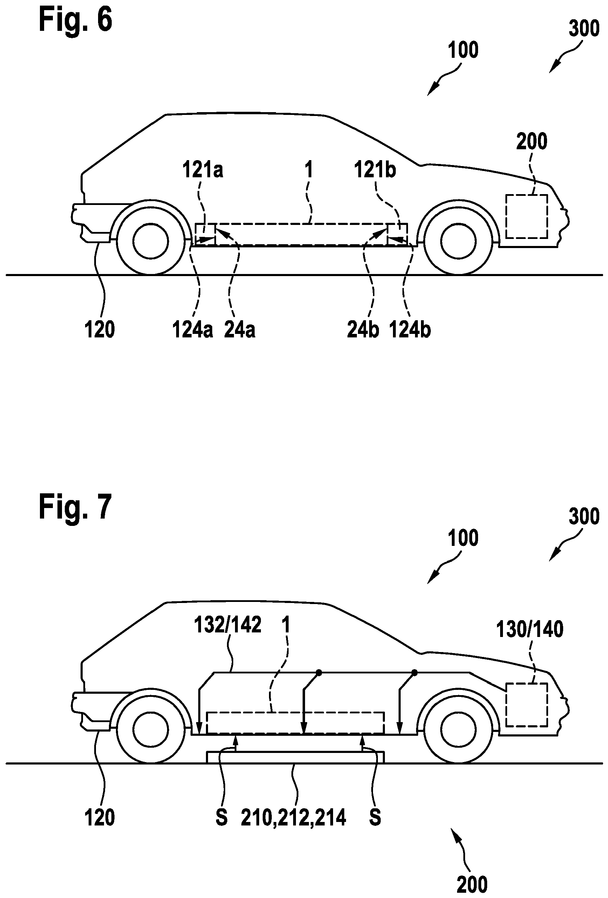

In Fig. 6 ist in einer Ausführungsform ein erfindungsgemäßes System 300 mit einem Kraftfahrzeug 100 und einer Kühlungsvorrichtung 200 zum Kühlen einer Karosserie 120 des Kraftfahrzeuges 100 in einer Vorderansicht dargestellt. In Fig. 6 weist das Kraftfahrzeug 100 eine interne Kühlungsvorrichtung 200 auf. Eine Druckgasspeichervorrichtung 1 bildet zumindest einen Teil des Unterbodens des Kraftfahrzeuges 100. Das Kraftfahrzeug 100, insbesondere die Karosserie 120, umfasst zwei Querträger 121a und 121b, wobei die Druckgasspeichervorrichtung 1 an die beiden Querträger 121a, 121b angeordnet ist. Insbesondere ist ein wärmeleitfähiger Körper 20 (nicht dargestellt) der Druckgasspeichervorrichtung 1 mit Befestigungsschnittstellen 24a und 24b an eine Gegenbefestigungsschnittstelle 124a des Querträgers 121a beziehungsweise an eine Gegenbefestigungsschnittstelle 124b des Querträger 121b der Karosserie 120 angeordnet.

In Fig. 7 ist in einer weiteren Ausführungsform ein erfindungsgemäßes System 300 mit einem Kraftfahrzeug 100 und einer Kühlungsvorrichtung 200 zum Kühlen einer Karosserie 120 des Kraftfahrzeuges 100 in einer Vorderansicht dargestellt. In Fig. 7 weist die Kühlungsvorrichtung 200 einen Ventilator 130 des Kraftfahrzeuges 100 und/oder einen Kühlkreislauf 140 des Kraftfahrzeuges 100 auf. Mittels Kühlluftleitelemente 132 wird eine von dem Ventilator 130 geförderte Kühlluft an verschiedene Stellen der Karosserie 120 des Kraftfahrzeuges 100 gefördert beziehungsweise wird über Kühlfluidleitelemente 142 ein Kühlfluid an verschiedene Stellen der Karosserie 120 des Kraftfahrzeuges 100 geleitet. Weiter weist die Kühlungsvorrichtung 200 ein externes Kühlungselement 210 zum Kühlen der Karosserie 120 des Kraftfahrzeuges 100 auf. Das externe Kühlungselement ist ein externer Ventilator 212 und/oder eine externe Wasseranspritzvorrichtung 214 zum Anspritzen des Kraftfahrzeuges 100 mit bspw. Wasser. Das externe Kühlungselement 210 ist unter dem Kraftfahrzeug angeordnet. Eine von dem externen Ventilator 212 geförderte Luft und/oder das von der Wasseranspritzvorrichtung 214 geförderte Wasser kann in Strömungsrichtung S, insbesondere im Wesentlichen senkrecht, gegen zumindest einen Teil der Karosserie 120, vorteilhafterweise gegen die komplette Karosserie 120, strömen/spritzen. Ganz vorteilhafterweise strömt die Luft des externen Ventilators 212 und/oder spritzt das Wasser der Wasseranspritzvorrichtung 214 gegen den Unterboden der Karosserie 120 des Kraftfahrzeuges 100.

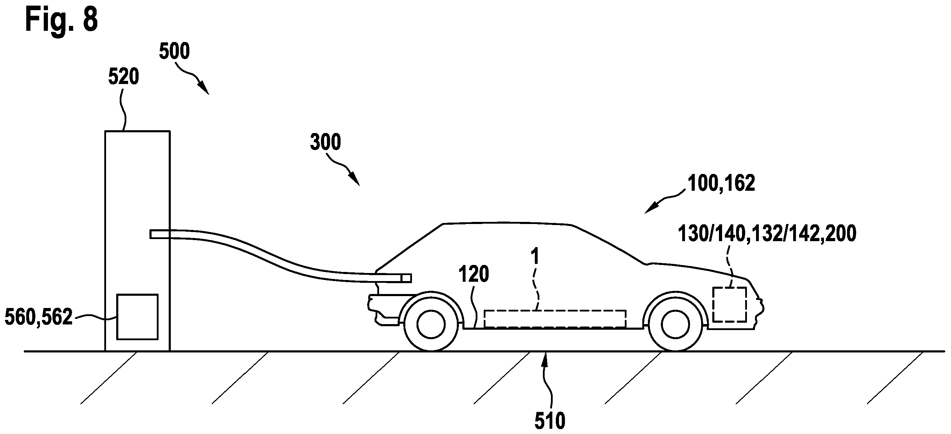

In Fig. 8 ist in einer Ausführungsform eine erfindungsgemäße Tankstelle 500 für ein System 300 mit einem Kraftfahrzeug 100 und einer Kühlungsvorrichtung 200 zum Kühlen einer Karosserie 120 des Kraftfahrzeuges 100 in einer Vorderansicht dargestellt. In Fig. 8 weist das Kraftfahrzeug 100 eine interne Kühlungsvorrichtung 200 auf. Die Tankstelle 500 weist einen Stellbereich 510 zum Abstellen des Kraftfahrzeuges 100 auf. Weiter ist in Fig. 8 eine Druckgasspeicherzapfsäule 520 an dem Stellbereich 510 zum Bereitstellen eines unter hohem Druck stehenden Gases illustriert. In Fig. 8 umfasst die Druckgasspeicherzapfsäule 520 eine Tankstellenkontrolleinheit 560 mit einer Datenschnittstelle 562 zum Kommunizieren von Daten mit einer Gegendatenschnittstelle 162 des Kraftfahrzeuges 100. Die Tankstellenkontrolleinheit kann auch außerhalb der Druckgasspeicherzapfsäule 520 angeordnet sein.

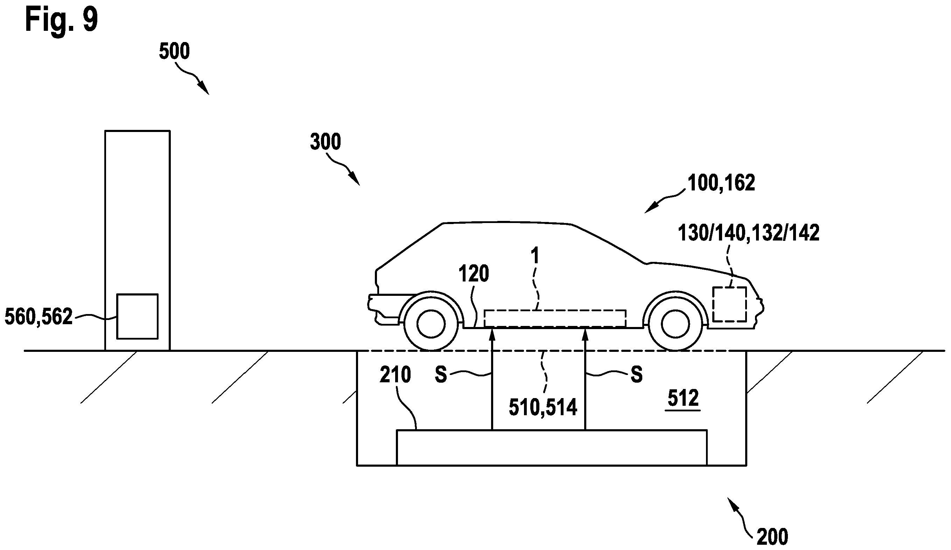

In Fig. 9 ist in einer weiteren Ausführungsform eine erfindungsgemäße Tankstelle 500 für ein System 300 mit einem Kraftfahrzeug 100 und einer Kühlungsvorrichtung 200 zum Kühlen einer Karosserie 120 des Kraftfahrzeuges 100 in einer Vorderansicht dargestellt. In Fig. 9 weist die Kühlungsvorrichtung 200 einerseits einen Ventilator 130 des Kraftfahrzeuges 100 und/oder einen Kühlkreislauf 140 des Kraftfahrzeuges 100 auf. Mittels Kühlluftleitelemente 132 wird eine von dem Ventilator 130 geförderte Kühlluft an verschiedene Stellen der Karosserie 120 des Kraftfahrzeuges 100 gefördert beziehungsweise wird über Kühlfluidleitelemente 142 ein Kühlfluid an verschiedene Stellen der Karosserie 120 des Kraftfahrzeuges 100 geleitet. Das Kühlluftleitelement 132 und das Kühlfluidleitelement 142 sind in Fig. 9 nicht explizit dargestellt. Ferner weist die Kühlungsvorrichtung 200 ein externes Kühlungselement 210 auf. Die Tankstelle 500 weist einen Stellbereich 510 zum Abstellen des Kraftfahrzeuges 100 auf. Weiter ist in Fig. 9 eine Druckgasspeicherzapfsäule 520 an dem Stellbereich 510 zum Bereitstellen eines unter hohem Druck stehenden Gases illustriert. In Fig. 9 umfasst die Druckgasspeicherzapfsäule 520 eine Tankstellenkontrolleinheit 560 mit einer Datenschnittstelle 562 zum Kommunizieren von Daten mit einer Gegendatenschnittstelle 162 des Kraftfahrzeuges 100. Die Tankstellenkontrolleinheit kann auch außerhalb der Druckgasspeicherzapfsäule 520 angeordnet sein. Das externe Kühlungselement 210 ist in dieser Ausführungsform in einer Fahrzeuggrube 512 mit einem fluiddurchlässigen Deckel 514 angeordnet. Durch den fluiddurchlässigen Deckel 514 kann mittels der Kühlungsvorrichtung 200, bspw. durch einen externen Ventilator 212 und/oder durch die externe Wasseranspritzvorrichtung 214, die Karosserie 120 des Kraftfahrzeuges 100 besonders einfach, ohne großen Strömungswiderstand, kühlen. Ganz vorteilhafterweise strömt die Luft des externen Ventilators 212 und/oder spritzt das Wasser der Wasseranspritzvorrichtung 214 in Strömungsrichtung S gegen den Unterboden der Karosserie 120 des Kraftfahrzeuges 100.

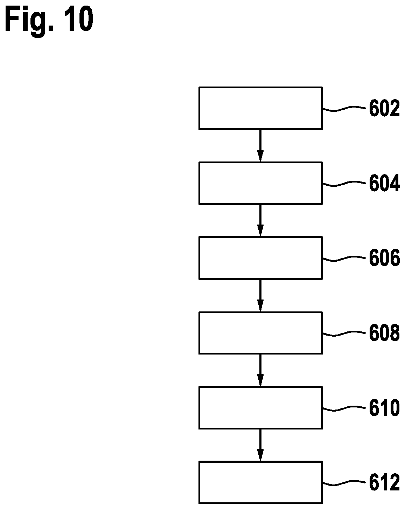

In Fig. 10 ist eine Ausführungsform eines erfindungsgemäßen Verfahrens zum Betanken eines Kraftfahrzeuges 100 offenbart. In einem ersten Schritt werden Daten zwischen der Datenschnittstelle 562 der Tankstelle 500 und der Gegendatenschnittstelle 162 des Kraftfahrzeuges 100 zum Ermitteln des Status des Betankungsvorgangs kommuniziert 602. Im nächsten Schritt erkennt 604 die Tankstellenkontrolleinheit 560 einen positiven Betankungsvorgangstatus. Als nächstes wird die Kühlungsvorrichtung 200 durch die Tankstellenkontrolleinheit 560 zum Kühlen der Karosserie 120 des Kraftfahrzeuges 100 aktiviert 606 und die Druckgasspeicher 10 des Kraftfahrzeuges 100 betankt 608. Darauffolgend wird das Betanken der Druckgasspeicher 10 beendet 610. Die Kühlungsvorrichtung 200 kann nach dem Beenden 610 des Betankens der Druckgasspeicher 10 weiter aktiviert bleiben und in einem zusätzlichen Schritt, erst wenn die Druckgasspeicher 10 einen festlegbaren Temperaturschwellenwert unterschritten haben, deaktiviert 612 werden. Damit kann gemeint sein, dass beispielsweise der Ventilator 130 und der Kühlkreislauf 140 des Kraftfahrzeuges auch bei einer anschließenden Weiterfahrt mit dem Kraftfahrzeug 100 zumindest für die Zeit, bis der festlegbare Temperaturschwellwert unterschritten ist, weiter aktiviert bleiben.

## Patentansprüche

1. Druckgasspeicheraufnahmevorrichtung (1) für ein Kraftfahrzeug (100) zum Kühlen von Druckgasspeichern (10), wobei die Druckgasspeicheraufnahmevorrichtung (1) aufweist: einen Körper (20) der wärmeleitfähig ist und eine Befestigungsschnittstelle (26) zum Anordnen an eine Gegenbefestigungsschnittstelle (126) einer Karosserie (120) des Kraftfahrzeuges (100) aufweist, einen Druckgasspeicher (10) zum Speichern von unter hohem Druck stehenden Gas, wobei die Druckgasspeicher (10) wärmeleitfähig sind, **dadurch gekennzeichnet, dass** der Körper (20) eine Vielzahl an kanalförmigen Aufnahmeflächen (22) zur Aufnahme der Druckgasspeicher (10) aufweist, wobei der Körper (20) Wärmeleitflächen (24) zur wärmekommunizierenden Verbindung mit der Karosserie (120) aufweist und der Druckgasspeicher (10) an den kanalförmigen Aufnahmeflächen (22) des Körpers (20) für eine Wärmekommunikation formschlüssig von dem Körper (20) aufgenommen sind.

2. Druckgasspeicheraufnahmevorrichtung (1) nach Anspruch 1,
**dadurch gekennzeichnet,**
**dass** zumindest 15 % der Außenmantelfläche (AM), vorzugsweise zumindest 25 % der Außenmantelfläche (AM), jedes Druckgasspeichers (10) an den jeweiligen kanalförmigen Aufnahmeflächen (22) des Körpers (20) für eine Wärmekommunikation mit dem Körper (20) aufgenommen sind.

3. Druckgasspeicheraufnahmevorrichtung (1) nach einem der vorangegangenen Ansprüche,
**dadurch gekennzeichnet,**
**dass** der Körper (20) zumindest eines der folgenden Elemente aufweist:
- ein Wärmeleitelement (32), insbesondere Kühlrippen und/oder Kühlkanäle und/oder eine Kühlplatte, zum Kühlen des Körpers,
- ein wärmeleitfähiges Elastizitätselement (34) zwischen den Druckgasspeichern (10) und den kanalförmigen Aufnahmeflächen (22) zum Ausgleich einer Wärmeausdehnung der Druckgasspeicher (10),
- ein Versteifungselement (36) zur Stabilisierung des Körpers (20).

4. System (300), wobei das System (300) ein Kraftfahrzeug (100) und eine Kühlungsvorrichtung (200) zum Kühlen einer Karosserie (120) des Kraftfahrzeuges (100) umfasst, wobei das Kraftfahrzeug (100) aufweist:
a) die Druckgasspeicheraufnahmevorrichtung (1) nach einem der Ansprüche 1 bis 3,
b) die Karosserie (120) mit der Gegenbefestigungsschnittstelle (124), wobei der wärmeleitfähige Körper (20) der Druckgasspeicheraufnahmevorrichtung (1) mit der Befestigungsschnittstelle (24) an die Gegenbefestigungsschnittstelle (124) angeordnet ist.

5. System (300) nach Anspruch 4,
**dadurch gekennzeichnet,**
**dass** die Kühlungsvorrichtung (200) einen Ventilator (130) des Kraftfahrzeuges (100) und ein Kühlluftleitelement (132) zum Leiten der von dem Ventilator (130) geförderten Kühlluft an die Karosserie (120) des Kraftfahrzeuges (100) aufweist und/oder dass die Kühlungsvorrichtung (200) einen Kühlkreislauf (140) des Kraftfahrzeuges (100) und ein Kühlfluidleitelement (142) zum Leiten des Kühlfluids an die Karosserie (120) des Kraftfahrzeuges (100) aufweist.

6. System (300) nach einem der Ansprüche 4 bis 5,
**dadurch gekennzeichnet,**
**dass** die Kühlungsvorrichtung (200) ein externes Kühlungselement (210) zum Kühlen der Karosserie (120) des Kraftfahrzeuges (100) aufweist, wobei das Kühlungselement (210) im Bereich des Kraftfahrzeuges (100) anordbar ist und das Kühlungselement (210) eines der folgenden Elemente ist:
- ein externer Ventilator (212),
- eine externe Wasseranspritzvorrichtung (214) zum Anspritzen des Kraftfahrzeuges (100) mit Wasser,
- eine Kühlkammer

7. Tankstelle (500) zur Verwendung mit dem System (300) nach einem der Ansprüche 4 bis 6, wobei die Tankstelle (500) aufweist:
a) einen Stellbereich (510) zum Abstellen des Kraftfahrzeuges (100),
b) eine Tankstellenkontrolleinheit (560) mit einer Datenschnittstelle (562) zum Kommunizieren von Daten mit einer Gegendatenschnittstelle (162) des Kraftfahrzeuges (100), wobei die Tankstellenkontrolleinheit (560) zumindest dazu ausgebildet ist, aufgrund der Datenkommunikation zwischen der Datenschnittstelle (562) und der Gegendatenschnittstelle (162) einen positiven Betankungsvorgangsstatus (S1) des Kraftfahrzeuges (100) zu erkennen und beim Erkennen des positiven Betankungsvorgangstatus (S1) die Kühlungsvorrichtung (200) zum Kühlen der Karosserie (120) des Kraftfahrzeuges (100) zu aktivieren.

8. Tankstelle (500) nach Anspruch 7,
**dadurch gekennzeichnet,**
**dass** die Tankstelle (500) das externe Kühlungselement (210) der Kühlungsvorrichtung (200) zum Kühlen der Karosserie (120) des Kraftfahrzeuges (100) aufweist, wobei das Kühlungselement (210) im Bereich des Kraftfahrzeuges (100) angeordnet ist und das Kühlungselement (210) eines der folgenden Elemente ist:
- der externe Ventilator (212),
- die externe Wasseranspritzvorrichtung (214) zum Anspritzen des Kraftfahrzeuges (100) mit Wasser,
- die Kühlkammer.

9. Tankstelle (500) nach Anspruch 7 bis 8,
**dadurch gekennzeichnet,**
**dass** der Stellbereich (510) eine Fahrzeuggrube (512) mit einem fluiddurchlässigen Deckel (514) aufweist, wobei in der Fahrzeuggrube (512) die Kühlungsvorrichtung (200) zum Kühlen der Karosserie (120) des Kraftfahrzeuges (100) angeordnet ist.

10. Verfahren, das mit dem System (300) nach einem der Ansprüche 4 bis 6 an der Tankstelle (500) nach einem der Ansprüche 7 bis 9 anzuwenden ist, wobei das Kraftfahrzeug (100) die Gegendatenschnittstelle (162) aufweist, und wobei das Verfahren die folgenden Schritte aufweist:
d) Datenkommunikation (602) zwischen der Datenschnittstelle (562) der Tankstelle (500) und der Gegendatenschnittstelle (162) des Kraftfahrzeuges (100) zum Ermitteln des Status des Betankungsvorgangs,
e) Erkennen (604) des positiven Betankungsvorgangsstatus durch die Tankstellenkontrolleinheit (560),
f) Aktivieren (606) der Kühlungsvorrichtung (200) durch die Tankstellenkontrolleinheit (560) und/oder durch eine Fahrzeugkontrolleinheit zum Kühlen der Karosserie (120) des Kraftfahrzeuges (100) und Betanken (608) der Druckgasspeicher (10) des Kraftfahrzeuges (100),

11. Verfahren nach Anspruch 10, wobei das Verfahren nach dem Schritt c) den folgenden Schritt d) aufweist:
e) Deaktivieren (612) der Kühlungsvorrichtung (200), wenn die Druckgasspeicher (10) einen festlegbaren Temperaturschwellenwert unterschritten haben.

## Claims

1. Pressurized gas tank receiving assembly (1) for a motor vehicle (100) for cooling pressurized gas tanks (10), wherein the pressurized gas tank receiving assembly (1) includes: a main body (20) which is thermally conductive and has a mounting interface (26) for arrangement on a counter mounting interface (126) of a body (120) of the motor vehicle (100); a pressurized gas tank (10) for storing gas under high pressure, wherein the pressurized gas tanks (10) are thermally conductive, **characterized in that** the main body (20) has a multiplicity of channel-shaped receiving surfaces (22) for accommodating the pressurized gas tanks (10), wherein the main body (20) has thermally conductive surfaces (24) for the thermally communicating connection with the body (120), and the pressurized gas tanks (10) for thermal communication are accommodated by the main body (20) in a form-fitting manner on the channel-shaped receiving surfaces (22) of the main body (20).

2. Pressurized gas tank receiving assembly (1) according to Claim 1,
**characterized in that**
at least 15% of the external shell surface (AM), preferably at least 25% of the external shell surface (AM), of each pressurized gas tank (10) is accommodated on the respective channel-shaped receiving surfaces (22) of the main body (20) for thermal communication with the main body (20).

3. Pressurized gas tank receiving assembly (1) according to one of the preceding claims,
**characterized in that**
the main body (20) includes at least one of the following elements:
- a thermally conductive element (32), in particular cooling fins and/or cooling ducts and/or a cooling plate, for cooling the main body;
- a thermally conductive elastic element (34) between the pressurized gas tanks (10) and the channel-shaped receiving surfaces (22) in order to compensate for a thermal expansion of the pressurized gas tanks (10);
- a reinforcing element (36) for stabilizing the main body (20).

4. System (300), wherein the system (300) comprises a motor vehicle (100) and a cooling device (200) for cooling a body (120) of the motor vehicle (100), wherein the motor vehicle (100) includes:
a) the pressurized gas tank receiving assembly (1) according to one of Claims 1 to 3;
b) the body (120) having the counter mounting interface (124), wherein the thermally conductive main body (20) of the pressurized gas tank receiving assembly (1) is arranged with the mounting interface (24) on the counter mounting interface (124).

5. System (300) according to Claim 4,
**characterized in that**
the cooling device (200) includes a fan (130) of the motor vehicle (100) and a cooling air guide element (132) for guiding the cooling air conveyed from the fan (130) to the body (120) of the motor vehicle (100), and/or **in that** the cooling device (200) includes a cooling circuit (140) of the motor vehicle (100) and a cooling fluid guide element (142) for guiding the cooling fluid to the body (120) of the motor vehicle (100).

6. System (300) according to one of Claims 4 to 5,
**characterized in that**
the cooling device (200) includes an external cooling element (210) for cooling the body (120) of the motor vehicle (100), wherein the cooling element (210) is arrangeable in the area of the motor vehicle (100) and the cooling element (210) is one of the following elements:
- an external fan (212);
- an external water spraying device (214) for spraying the motor vehicle (100) with water;
- a cooling chamber.

7. Filling station (500) for use with the system (300) according to one of Claims 4 to 6, wherein the filling station (500) includes:
a) a parking area (510) for parking the motor vehicle (100);
b) a filling station control unit (560) having a data interface (562) for communicating data with a counter data interface (162) of the motor vehicle (100), wherein the filling station control unit (560) is designed at least for recognizing a positive refuelling process status (S1) of the motor vehicle (100) based on the data communication between the data interface (562) and the counter data interface (162) and, upon recognition of the positive refuelling process status (S1), activating the cooling device (200) in order to cool the body (120) of the motor vehicle (100).

8. Filling station (500) according to Claim 7,
**characterized in that**
the filling station (500) includes the external cooling element (210) of the cooling device (200) for cooling the body (120) of the motor vehicle (100), wherein the cooling element (210) is arranged in the area of the motor vehicle (100) and the cooling element (210) is one of the following elements:
- the external fan (212);
- the external water spraying device (214) for spraying the motor vehicle (100) with water;
- the cooling chamber.

9. Filling station (500) according to Claims 7 to 8,
**characterized in that**
the parking area (510) includes an inspection pit (512) having a fluid-permeable cover (514), wherein the cooling device (200) is arranged in the inspection pit (512) for cooling the body (120) of the motor vehicle (100).

10. Method which is to be used with the system (300) according to one of Claims 4 to 6 at the filling station (500) according to one of Claims 7 to 9, wherein the motor vehicle (100) has the counter data interface (162), and wherein the method comprises the following steps:
d) data communication (602) between the data interface (562) of the filling station (500) and the counter data interface (162) of the motor vehicle (100) in order to ascertain the status of the refuelling process;
e) recognizing (604) the positive refuelling process status by means of the filling station control unit (560);
f) activating (606) the cooling device (200) by the filling station control unit (560) and/or by a vehicle control unit in order to cool the body (120) of the motor vehicle (100) and fill (608) the pressurized gas tanks (10) of the motor vehicle (100).

11. Method according to Claim 10, wherein the method after step c) comprises the following step d):
e) deactivating (612) the cooling device (200) if the pressurized gas tanks (10) have fallen below an establishable temperature threshold value.

## Revendications

1. Dispositif de réception de réservoir de gaz sous pression (1) pour un véhicule automobile (100) pour refroidir des réservoirs de gaz sous pression (10), le dispositif de réception de réservoir de gaz sous pression (1) présentant : un corps (20) qui est thermiquement conducteur et qui présente une interface de fixation (26) destinée à être agencée sur une interface de fixation opposée (126) d'une carrosserie (120) du véhicule automobile (100), un réservoir de gaz sous pression (10) destiné à stocker du gaz sous haute pression, le réservoir de gaz sous pression (10) étant thermiquement conducteur, **caractérisé en ce que** le corps (20) présente une pluralité de surfaces de réception en forme de canal (22) pour recevoir les réservoirs de gaz sous pression (10), le corps (20) présentant des surfaces thermiquement conductrices (24) pour la liaison de communication thermique avec la carrosserie (120) et les réservoirs de gaz sous pression (10) étant reçus par le corps (20) par complémentarité de forme sur les surfaces de réception en forme de canal (22) du corps (20) pour une communication thermique.

2. Dispositif de réception de réservoir de gaz sous pression (1) selon la revendication 1,
**caractérisé en ce**
**qu'**au moins 15 % de la surface d'enveloppe extérieure (AM), de préférence au moins 25 % de la surface d'enveloppe extérieure (AM), de chaque réservoir de gaz sous pression (10) est reçue sur les surfaces de réception en forme de canal respectives (22) du corps (20) pour une communication thermique avec le corps (20).

3. Dispositif de réception de réservoir de gaz sous pression (1) selon l'une quelconque des revendications précédentes,
**caractérisé en ce que**
le corps (20) présente au moins l'un des éléments suivants :
- un élément thermiquement conducteur (32), notamment des nervures de refroidissement et/ou des canaux de refroidissement et/ou une plaque de refroidissement, pour refroidir le corps,
- un élément élastique thermiquement conducteur (34) entre les réservoirs de gaz sous pression (10) et les surfaces de réception en forme de canal (22) pour compenser une dilatation thermique des réservoirs de gaz sous pression (10),
- un élément de raidissement (36) pour stabiliser le corps (20).

4. Système (300), le système (300) comprenant un véhicule automobile (100) et un dispositif de refroidissement (200) pour refroidir une carrosserie (120) du véhicule automobile (100), le véhicule automobile (100) comprenant :
a) le dispositif de réception de réservoir de gaz sous pression (1) selon l'une quelconque des revendications 1 à 3,
b) la carrosserie (120) avec l'interface de fixation opposée (124), le corps thermiquement conducteur (20) du dispositif de réception de réservoir de gaz sous pression (1) étant agencé avec l'interface de fixation (24) sur l'interface de fixation opposée (124).

5. Système (300) selon la revendication 4,
**caractérisé en ce que**
le dispositif de refroidissement (200) présente un ventilateur (130) du véhicule automobile (100) et un élément de guidage d'air de refroidissement (132) pour guider l'air de refroidissement transporté par le ventilateur (130) vers la carrosserie (120) du véhicule automobile (100) et/ou **en ce que** le dispositif de refroidissement (200) présente un circuit de refroidissement (140) du véhicule automobile (100) et un élément de guidage de fluide de refroidissement (142) pour guider le fluide de refroidissement vers la carrosserie (120) du véhicule automobile (100).

6. Système (300) selon l'une quelconque des revendications 4 à 5,
**caractérisé en ce que**
le dispositif de refroidissement (200) présente un élément de refroidissement externe (210) pour refroidir la carrosserie (120) du véhicule automobile (100), l'élément de refroidissement (210) pouvant être agencé dans la zone du véhicule automobile (100) et l'élément de refroidissement (210) étant l'un des éléments suivants :
- un ventilateur externe (212),
- un dispositif de pulvérisation d'eau externe (214) pour pulvériser de l'eau sur le véhicule automobile (100),
- une chambre de refroidissement.

7. Station-service (500) destinée à être utilisée avec le système (300) selon l'une quelconque des revendications 4 à 6, la station-service (500) présentant :
a) une zone de stationnement (510) pour garer le véhicule automobile (100),
b) une unité de commande de station-service (560) avec une interface de données (562) pour communiquer des données avec une interface de données opposée (162) du véhicule automobile (100), l'unité de commande de station-service (560) étant réalisée au moins pour détecter un état d'opération de ravitaillement positif (S1) du véhicule automobile (100) sur la base de la communication de données entre l'interface de données (562) et l'interface de données opposée (162) et, lors de la détection de l'état d'opération de ravitaillement positif (S1), pour activer le dispositif de refroidissement (200) pour refroidir la carrosserie (120) du véhicule automobile (100).

8. Station-service (500) selon la revendication 7,
**caractérisée en ce que**
la station-service (500) présente l'élément de refroidissement externe (210) du dispositif de refroidissement (200) pour refroidir la carrosserie (120) du véhicule automobile (100), l'élément de refroidissement (210) étant agencé dans la zone du véhicule automobile (100) et l'élément de refroidissement (210) étant l'un des éléments suivants :
- le ventilateur externe (212),
- le dispositif de pulvérisation d'eau externe (214) pour pulvériser de l'eau sur le véhicule automobile (100),
- la chambre de refroidissement.

9. Station-service (500) selon les revendications 7 à 8,
**caractérisée en ce que**
la zone de stationnement (510) présente une fosse de véhicule (512) avec un couvercle (514) perméable aux fluides, le dispositif de refroidissement (200) étant agencé dans la fosse de véhicule (512) pour refroidir la carrosserie (120) du véhicule automobile (100).

10. Procédé à appliquer avec le système (300) selon l'une quelconque des revendications 4 à 6 à la station-service (500) selon l'une quelconque des revendications 7 à 9, le véhicule automobile (100) présentant l'interface de données opposée (162), et le procédé présentant les étapes suivantes :
d) la communication de données (602) entre l'interface de données (562) de la station-service (500) et l'interface de données opposée (162) du véhicule automobile (100) pour déterminer l'état de l'opération de ravitaillement,
e) la détection (604) de l'état d'opération de ravitaillement positif par l'unité de commande de station-service (560),
f) l'activation (606) du dispositif de refroidissement (200) par l'unité de commande de station-service (560) et/ou par une unité de commande de véhicule pour refroidir la carrosserie (120) du véhicule automobile (100) et le ravitaillement (608) des réservoirs de gaz sous pression (10) du véhicule automobile (100),

11. Procédé selon la revendication 10, le procédé présentant, après l'étape c), l'étape d) suivante :
e) la désactivation (612) du dispositif de refroidissement (200) lorsque les réservoirs de gaz sous pression (10) sont passés en dessous d'une valeur seuil de température pouvant être fixée.
